Europäisches Patentamt

European Patent Office

Office européen des brevets

(19)

(11) Veröffentlichungsnummer : **0 182 354**
**B1**

(12) **EUROPÄISCHE PATENTSCHRIFT**

(45) Veröffentlichungstag der Patentschrift :
26.04.89

(51) Int. Cl.⁴ : **F 01 B   3/02**, F 04 B   1/22

(21) Anmeldenummer : 85114696.9

(22) Anmeldetag : 19.11.85

(54) Schrägscheiben-Schwenklager für eine hydraulische Axialkolbenmaschine.

(30) Priorität : 20.11.84 DE 3442391

(43) Veröffentlichungstag der Anmeldung :
28.05.86 Patentblatt 86/22

(45) Bekanntmachung des Hinweises auf die Patenterteilung : 26.04.89 Patentblatt 89/17

(84) Benannte Vertragsstaaten :
DE FR GB IT SE

(56) Entgegenhaltungen :
DE-A- 1 653 617
DE-A- 2 625 298
DE-A- 2 826 928
DE-A- 3 000 922
SOVIET INVENTIONS ILLUSTRATED,Sektion P,Q;
WOCHE E05, 17. März 1982, DERWENT PUBLICA-
TIONS LTD, London; Q 5

(73) Patentinhaber : Hydromatik GmbH
Glockeraustrasse 2
D-7915 Elchingen 2 (DE)

(72) Erfinder : Rohde, Rolf
Ahornweg
D-7915 Elchingen 3 (DE)
Erfinder : Ritter, Günter
Schwalbenstrasse 35
D-7916 Nersingen (DE)

(74) Vertreter : Körber, Wolfhart, Dr. et al
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse
10
D-8000 München 22 (DE)

EP 0 182 354 B1

**Beschreibung**

Die Erfindung bezieht sich auf ein Schrägscheiben-Schwenklager nach dem Oberbegriff des Anspruchs 1.

Ein Schrägscheiben-Schwenklager dieser Bauart ist in der DE-OS 28 26 928 beschrieben und dargestellt. Bei dieser bekannten Bauart ist dem Schrägscheiben-Schwenklager eine Nachführeinrichtung zugeordnet, die verhindert, daß der die Wälzlagerelemente aufnehmende Käfig aus seinem ihm vorgegebenen Bewegungsbereich, nämlich aus seiner im Schwenklager günstigsten Lage verrutscht. Beim Fehlen einer Nachführeinrichtung ist ein solches Verrutschen möglich, weil die Wälzlagerelemente nicht nur Rollenbewegungen ausführen, sondern auch Gleitbewegungen aufgrund von schnellen Schwenkbewegungen und/oder Erschütterungen und/oder der Massenträgheit des Wälzlagersegments, die zu Lagerverschiebungen des Wälzlagersegments führen. Hierdurch entsteht eine ungünstige Lage des oder der Lagersegmente zur Lastrichtung.

Bei der bekannten Nachführeinrichtung besteht der Nachführmechanismus aus einem Winkelhebel, der um eine parallel zur Schwenkachse gerichtete Achse frei schwenkbar gelagert ist, der an seinem einen Ende mit dem Mitnehmer des Käfigs in Antriebsverbindung steht und an seinem anderen Ende durch das Führungsglied in der ersten Führung geführt ist. Bei Schwenkbewegungen der Schrägscheibe schwenkt auch der Winkelhebel um seine Achse, und zwar jeweils in einer der Schwenkrichtung der Schrägscheibe entgegengesetzten Richtung.

Der Erfindung liegt die Aufgabe zugrunde, ein Schrägscheiben-Schwenklager der eingangs bezeichneten Bauart zu vereinfachen.

Diese Aufgabe wird durch die im Anspruch 1 enthaltenen Merkmale gelöst.

Bei der erfindungsgemäßen Ausgestaltung ist das Führungsglied zwar längs jeder Führungsnut bzw. jedes Führungsstegs verschiebbar, jedoch ergibt sich aufgrund der einander überkreuzenden Anordnung eine Zwangsführung für das Führungsglied. Diese Zwangsführung ermöglicht es, das Führungsglied unmittelbar mit dem Mitnehmer zusammenwirken zu lassen.

Bei etwa gleichen und gleichmäßigen Neigungswinkeln der Führungsnuten werden eine zur Bewegungsrichtung geneigte Bewegung des Führungsgliedes und eine Bewegung des Wälzlagersegments in Umfangsrichtung erzwungen. Letztere steht mit der Schwenkbewegung der Schrägscheibe in einem Verhältnis von etwa 1 : 2.

Bei der erfindungsgemäßen Ausgestaltung wird das Übersetzungsverhältnis zwischen der Schwenkbewegung der Schrägscheibe und der Bewegung des Wälzlagersegments durch die Neigungswinkel der Führungsnuten und durch die Ausrichtung der zweiten Führung gemäß Anspruch 2 und/oder 3 bestimmt. Gleichmäßig große Neigungswinkel ergeben ein Übersetzungsverhältnis der Bewegungen von etwa 1 : 2, wie schon beschrieben. Dagegen ergeben ungleiche Neigungswinkel und von der radialen Ausrichtung abweichende Ausrichtungen der zweiten Führung größere oder kleinere Übersetzungsverhältnisse.

Bei der erfindungsgemäßen Ausgestaltung ist zu berücksichtigen, daß aufgrund der unterschiedlichen Radien der Lagerflächen das Verhältnis zwischen der Bewegung des Wälzlagersegments und der Schrägscheibe nicht genau 1 : ist. Der Unterschied ist jedoch sehr geringfügig.

Absolut genaue Übersetzungsverhältnisse können durch die Ausgestaltungen gemäß Anspruch 4 und/oder 5 erreicht werden.

Versuche haben jedoch ergeben, daß gerade und gleichmäßig geneigte Führungsnuten und eine radiale Ausrichtung der zweiten Führung eine funktionsfähige Nachführeinrichtung ergeben.

Die im Anspruch 6 enthaltenen Merkmale ergeben nicht nur einfache Ausgestaltungsformen für die Führungsnuten, sondern auch für das Führungsglied, das in diesem Falle durch eine einfache Kugel gebildet ist.

Je nach Platzbedarf und Konstruktion lassen sich gemäß den Ansprüchen 7 und 8 Ausführungsformen verwirklichen, bei denen die Führung und der Mitnehmer sich parallel zu den Lagerflächen (Anspruch 7) oder senkrecht zu den Lagerflächen (Anspruch 8) erstrecken. Im ersten Falle bedarf es entsprechend den Lagerflächen gekrümmter Führungsflächen. Im zweiten Falle erstreckt sich die Führung an ebenen Flächen.

Im Rahmen der Erfindung sind natürlich eine Vielzahl von Zwischenstellungen möglich. Hierzu steht theoretisch ein Bereich von etwa 180° zur Verfügung, in dem eine Vielzahl von verschiedenen Winkelstellungen des Mitnehmers bzw. der Führung möglich sind.

Die Ausbildung nach Anspruch 10 umfaßt eine einfache Ausführungsform, die sich insbesondere dann einfach und preiswert verwirklichen läßt, wenn der Käfig und der Mitnehmer aus Kunststoff bestehen.

Nachfolgend werden 3 Ausführungsbeispiele der Erfindung anhand einer vereinfachten Zeichnung näher beschrieben.

Es zeigt :

Fig. 1 eine Axialkolbenmaschine mit einem erfindungsgemäß ausgestalteten Schrägscheiben-Schwenklager mit einer Nachführeinrichtung im teilweisen Längsschnitt ;

Fig. 2 das Schrägscheiben-Schwenklager nach Fig. 1 bei O-Stellung und in etwas vergrößerten Darstellung ;

Fig. 3 einen Schnitt durch das Schrägscheiben-Schwenklager gemäß Linie III-III in Fig. 2 ;

Fig. 4 ein der Fig. 3 entsprechender Schnitt durch ein Schrägscheiben-Schwenklager als zweites Ausführungsbeispiel ;

Fig. 5 eine der Figur 2 entsprechende Ansicht eines Schrägscheiben-Schwenklagers als drittes Ausführungsbeispiel.

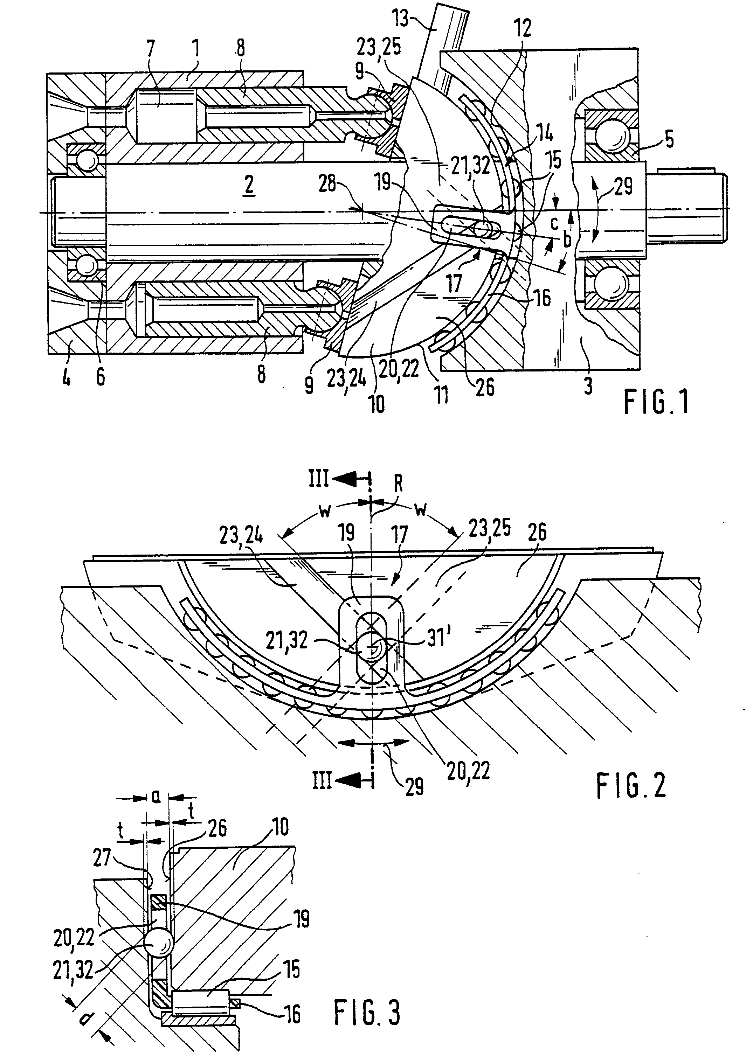

Gemäß Fig. 1 besteht die Axialkolbenmaschine aus einer Zylindertrommel 1, die auf einer Welle 2 angeordnet ist, wobei die Welle je nach Verwendung der Maschine als Pumpe oder als Motor, Antriebswelle oder Abtriebswelle ist. Die Welle 2 ist in einem nur mit den Gehäuseteilen 3 und 4 bezeichneten Gehäuse über Lager 5 und 6 gelagert. Innerhalb der Zylindertrommel 1 und innerhalb von Zylinderbohrungen 7 sind Kolben 8 angeordnet, die sich über Lagerschuhe 9 an einer Schrägscheibe abstützen. Die Schrägscheibe 10 weist eine zylinderische Lagerfläche 11 auf, die einer hohlzylindrischen Lagerfläche 12 im Gehäuseteil 3 gegenüberliegt. Der Hub der Kolben 8 in den Zylinderbohrungen 7 wird in bekannter Weise durch Veränderung der Winkelstellung der Schrägscheibe 10 gegenüber der Achse der Welle 2 verändert. Dazu greift beispielsweise an einen fest mit der Schrägscheibe 10 verbundenen Hebel 13 eine nicht dargestellte Verstellvorrichtung an. In dem Lagerspalt zwischen den Lagerflächen 11 und 12 ist ein Wälzlager-Segment 14 angeordnet, dessen Wälzkörper 15 durch einen Käfig 16 geführt und gehalten werden.

Die erfindungsgemäße Nachführeinrichtung ist allgemein mit 17 bezeichnet und umfaßt einen Mitnehmer 19 am Käfig 18, ein Führungsglied 21, das den Mitnehmer 19 in einem radial ausgerichteten Langloch 22 durchfaßt, und eine allgemein mit 23 bezeichnete erste Führung für das Führungsglied 21, die durch zwei Führungsnuten 24, 25 gebildet ist, die in einander gegenüberliegenden Flächen 26, 27 (Fig. 3) eingearbeitet sind, die sich senkrecht zu den Lagerflächen 11, 12 und senkrecht zur Schwenkachse 28 der Schrägscheibe 10 erstrecken. Das Langloch 22 stellt eine zweite Führung 20 für das Führungsglied 21 dar, die radiale Relativbewegungen zwischen dem Führungsglied 21 und dem Mitnehmer 19 ermöglicht.

Wie am deutlichsten in Fig. 2 zu erkennen ist, sind die Führungsnuten 24, 25, von denen die Führungsnut 24 in der Schrägscheibe 10 sichtbar ist, und die nicht sichtbare Führungsnut 25 im Gehäuseteil 3 durch gestrichelte Linien angedeutet ist, zur Bewegungsrichtung 29 bzw. zum jeweilig durch das Führungsglied 21 gehenden Radius R gleichmäßig geneigt, und zwar um die Winkel w. Die Führungsnuten 24, 25 überkreuzen sich und bilden somit eine Führungsstelle 31 für das Führungsglied 21, die sich immer im Kreuzungspunkt der Führungsnuten 24, 25 befindet.

Das Führungsglied 21 wird durch eine Kugel 32 gebildet, und die Führungsnuten 24, 25 sind entsprechend der Kugel 32 gerundet. Die Kugel 32 ist ohne nennenswertes Bewegungsspiel in den Führungsnuten 24, 25 aufgenommen, d. h. der Durchmesser d der Kugel 32 entspricht der Summe aus den Nuttiefen t und dem Abstand a zwischen den Flächen 26, 27. Der gegenüber dem Käfig 16 rechtwinklig und radial einwärts abgewinkelte Mitnehmer 19 ist zwecks Wahrung eines beiderseitigen Bewegungsspiels dünner bemessen, als der Abstand a zwischen den Flächen 26, 27 (Fig. 3).

Bei gleich großen, gegensinnigen Neigungswinkeln w verhalten sich beim Schwenken der Schrägscheibe 10 deren Schwenkweg b und der Schwenkweg c des Wälzlager-Segments 14 wie 2 : 1. Der Unterschied der Schwenkwege b, c ist nach einer Schwenkung der Schrägscheibe 10 in Fig. 1 deutlich sichtbar.

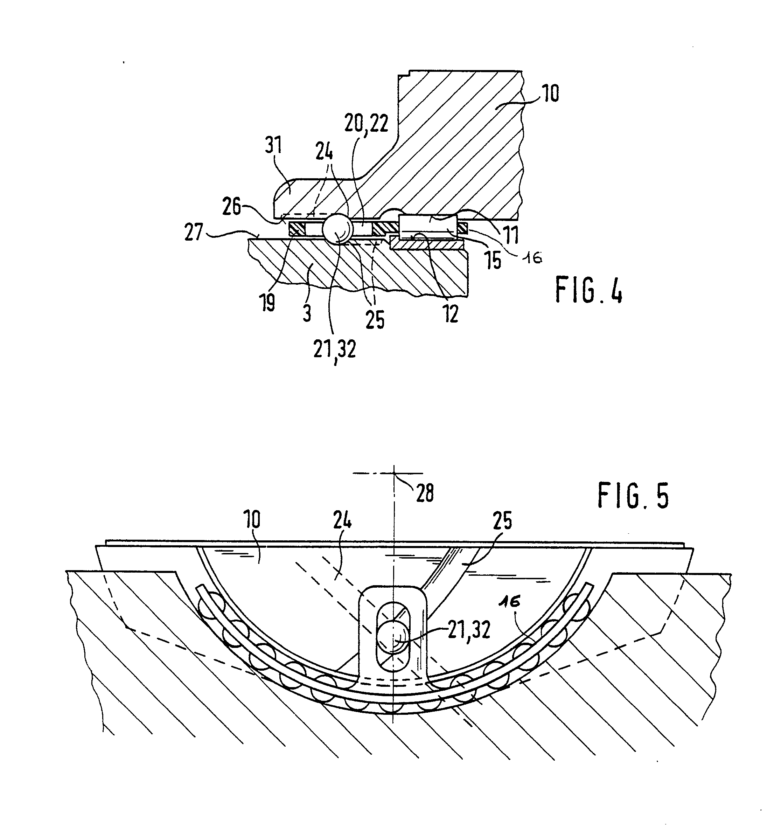

Das zweite Ausführungsbeispiel gemäß Fig. 4 unterscheidet sich vom ersten dadurch, daß die Flächen 26, 27, die Führungsnuten 24, 25 und der Mitnehmer 19 sich nicht quer zu den Lagerflächen 11, 12 erstrecken, sondern parallel zu diesen. Die Flächen 26, 27 sind folglich in gleicher Weise kreisbogenförmig gekrümmt wie die Lagerflächen 11, 12 und stellen somit seitliche Verbreiterungen der Lagerflächen 11, 12 dar. Die Schrägscheibe 10 und das diese lagernde Gehäuseteil 3 sind bei diesem Ausführungsbeispiel entsprechend anders konstruiert.

Zur Realisierung der Fläche 27 ist das Gehäuseteil 3 weiter ausgenommen und die Schrägscheibe 10 weist einen seitlichen Ringansatz 31 auf, an dem die der Fläche 27 gegenüberliegende Fläche 28 ausgebildet ist. Die Führungsnuten 24, 25 verlaufen ebenfalls geneigt zur Bewegungsrichtung, die in der Fig. 4 senkrecht zur Zeichnungsebene gerichtet ist, und sie überkreuzen sich auch in der dem ersten Ausführungsbeispiel entsprechender Weise. In Fig. 4 ist der geneigte und kreuzweise Verlauf der Führungsnuten 24, 25 nicht sichtbar.

Wie schon erwähnt, verhalten sich bei gleich großen, gegensinnigen Neigungswinkeln w die Schwenkbewegungen b der Schrägscheibe 10 zu den Schwenkbewegungen c des Wälzlager-Segmentes 14 wie 2 : 1. Der absolute Winkel (w + w) hat dabei keinen Einfluß auf die Übersetzung. Sind die Winkel w unterschiedlich zum Radius R geneigt, ergeben sich entsprechend unterschiedliche Übersetzungsverhältnisse. Diese verändern sich dann aber je nach Schwenkstellung der Schrägscheibe 10, verursacht durch die auf dem Radius R wandernde Führungs- bzw. Kreuzungsstelle 31 (Kraftangriffspunkt) des Führungsgliedes 21. Der Übersetzungsfehler ist abhängig von der absoluten Neigung der Führungsnuten 24, 25. Der Übersetzungsfehler läßt sich dadurch eliminieren, daß wenigstens eine Führungsnute 24, 25 gekrümmt verläuft, wie es in der Fig. 5 als drittes Ausführungsbeispiel dargestellt ist. Bei diesem Ausführungsbeispiel ist die in der Schrägscheibe 10 verlaufende Führungsnut 25 gekrümmt, und zwar — von der Schwenkachse 28 aus gesehen — konvex gekrümmt.

Eine weitere Möglichkeit, sowohl das Übersetzungsverhältnis zu verändern als auch Übersetzungsfehler zu eliminieren besteht darin, die durch das Langloch 22 gebildete Kulissenführung zum Radius R geneigt oder auch gleichzeitig gekrümmt auszubilden. Dabei bedarf es natürlich einer Übereinstimmung aller drei Führungsbahnen.

Im Rahmen der Erfindung ist es möglich, die Führung 23 durch andere Führungen zu bilden, z. B. durch Führungsstege, deren Führungsquerschnitt unterschiedlich sein kann. Entsprechende Führungsflächen sind dann auch am Führungsglied 21 auszubilden.

Es ist im Rahmen der Erfindung auch möglich, die Führungsnuten 24, 25 durch Führungsstege zu ersetzen. Führungsstege unterscheiden sich von Führungsnuten lediglich dadurch, daß sie von den Flächen 26, 27 abheben und stellen somit äquivalente Führungsmittel dar.

**Patentansprüche**

1. Schrägscheiben-Schwenklager in einer hydraulischen Axialkolbenmaschine, bei der zwischen der hohlzylindrischen Lagerfläche für die Schrägscheibe im Gehäuse und der zylindrischen Lagerfläche an der Schrägscheibe Wälzlager-Segmente angeordnet sind, die in bogenförmigen Käfigen gehalten sind, denen jeweils eine Nachführeinrichtung zugeordnet ist, die einen mittels eines Führungsgliedes in einer ersten Führung geführten Nachführmechanismus aufweist, der mit einem Mitnehmer des Käfigs in Antriebsverbindung steht, dadurch gekennzeichnet, daß die erste Führung (23) durch zwei gegensinnig und insbesondere gleichmäßig zur Bewegungsrichtung (29) geneigte und einander überkreuzende Führungsnuten (24, 25) gebildet ist, die an sich einander gegenüberliegend etwa parallel zueinander erstrekenden gehäuseseitigen und schrägscheibenseitigen Flächen (26, 27) angeordnet sind, und daß das Führungsglied (21) jeweils in der Kreuzungsstelle (31) in den Führungsnuten (24, 25) geführt ist.

2. Schrägscheiben-Schwenklager nach Anspruch 1, dadurch gekennzeichnet, daß das Führungsglied (21) in einer quer, insbesondere senkrecht zur Bewegungsrichtung (29) des Wälzlager-Segments (14) gerichtete Relativbewegungen ermöglichenden zweiten Führung (20) mit dem Mitnehmer (19) in Antriebsverbindung steht.

3. Schrägscheiben-Schwenklager nach Anspruch 2, dadurch gekennzeichnet, daß die zweite Führung (20) durch ein Langloch (22) im Mitnehmer (19) gebildet ist, in dem das Führungsglied (21) den Mitnehmer (19) durchfaßt.

4. Schrägscheiben-Schwenklager nach einem der Ansprüche 1 bis 3, dadurch gekennzeichnet, daß wenigstens eine der durch die Führungsnuten (24, 25) gebildeten Führungsbahnen in der Schwenkebene gekrümmt ist.

5. Schrägscheiben-Schwenklager nach einem der Ansprüche 1 bis 3, dadurch gekennzeichnet, daß die durch die zweite Führung (22) gebildete Führungsbahn in der Schwenkebene gekrümmt und/oder geneigt ist.

6. Schrägscheiben-Schwenklager nach einem der Ansprüche 1 bis 5, dadurch gekennzeichnet, daß die Führungsnuten (24, 25) im Querschnitt kreisförmig gerundet sind und das Führungsglied (21) durch eine den Rundungen entsprechend bemessene Kugel (32) gebildet ist.

7. Schrägscheiben-Schwenklager nach einem der Ansprüche 1 bis 6, dadurch gekennzeichnet, daß der Mitnehmer (19) sich parallel zu den Lagerflächen (11, 12) erstreckt und die erste Führung (23) an seitlichen Verbreiterungen der Lagerflächen (11, 12) oder an sich parallel zu den Lagerflächen (11, 12) erstreckenden Flächen (26, 27) ausgebildet ist (Fig. 4).

8. Schrägscheiben-Schwegklager nach einem der Ansprüche 1 bis 6, dadurch gekennzeichnet, daß der Mitnehmer (19) und die Flächen (26, 27) sich radial zur Schwenkachse (28) erstrecken und die erste Führung (23) an diesen Flächen (26, 27) ausgebildet ist (Fig. 3).

9. Schrägscheiben-Schwenklager nach Anspruch 8, dadurch gekennzeichnet, daß der Mitnehmer (19) radial einwärts gerichtet ist.

10. Schrägscheiben-Schwenklager nach einem der Ansprüche 1 bis 6, dadurch gekennzeichnet, daß der Mitnehmer (19) einstückig an den Käfig (16) angeformt ist.

11. Schrägscheiben-Schwenklager nach Anspruch 7, dadurch gekennzeichnet, daß der Käfig (16) aus Kunststoff besteht und der Mitnehmer (19) an den Käfig (16) angespritzt ist.

**Claims**

1. Swash plate swivel bearing in a hydraulic axial piston machine, in which roller-bearing segments are arranged between the hollow cylindrical bearing surface for the swash plate in the housing and the cylindrical bearing surface on the swash plate, said roller-bearing segments being held in curved cages with each of which is associated a tracker having a tracking mechanism that is guided by a guide member in a first guide and is in driving connection with a carrier of the cage, characterised in that the first guide (23) is formed by two guide grooves (24, 25) that cross one another and are inclined in opposite senses, and in particular symmetrically, to the direction of movement (29), said guide grooves being arranged on opposed and substantially parallel surfaces (26, 27) on the housing side and on the swash plate side, and in that the guide member (21) is guided in the guide grooves (24, 25) at their point of intersection (31).

2. Swash plate swivel bearing according to claim 1, characterised in that the guide member (21) is in driving connection with the carrier (19) in a second transverse guide (20), in particular so as to make possible movement perpendicular to the direction of movement (29) of the roller-bearing segment (14).

3. Swash plate swivel bearing according to claim 2, characterised in that the second guide (20) is formed by an elongated hole (22) in the carrier (19), through which the guide member (21) passes and engages the carrier (19).

4. Swash plate swivel bearing according to any one of claims 1 to 3, characterised in that at least one of the guide tracks formed by the guide grooves (24, 25) is curved in the swivel plane.

5. Swash plate swivel bearing according to any one of claims 1 to 3, characterised in that the guide track formed by the second guide (22) is curved and/or inclined in the swivel plane.

6. Swash plate swivel bearing according to any one of claims 1 to 5, characterised in that the guide grooves (24, 25) have a circularly rounded cross-section and the guide member (21) is formed by a ball (32) corresponding in size to the rounding.

7. Swash plate swivel bearing according to any one of claims 1 to 6, characterised in that the carrier (19) extends parallel to the bearing surfaces (11, 12) and the first guide (23) is formed on lateral extensions of the bearing surfaces (11, 12) or on surfaces (26, 27) extending parallel to the bearing surfaces (11, 12) (Fig. 4).

8. Swash plate swivel bearing according to any one of claims 1 to 6, characterised in that the carrier (19) and the surfaces (26, 27) extend radially towards the swivel axis (28) and the first guide (23) is formed on these surfaces (26, 27) (Fig. 3).

9. Swash plate swivel bearing according to claim 8, characterised in that the carrier (19) is directed radially inwards.

10. Swash plate swivel bearing according to any one of claims 1 to 6, characterised in that the carrier (19) is integral with the cage (16).

11. Swash plate swivel bearing according to claim 7, characterised in that the cage (16) consists of plastics material and the carrier (19) is injection moulded onto the cage (16).


**Revendications**

1. Coussinet orientable pour le disque en nutation dans une machine hydraulique à pistons axiaux, dans laquelle des segments de roulements à rouleaux sont disposés entre la portée cylindrique concave ménagée dans le boîtier pour le disque en nutation et la portée cylindrique du disque en nutation, ces segments étant maintenus dans des cages en forme d'arceaux, à chacun de ceux-ci étant associé un dispositif de guidage, lequel présente un mécanisme de guidage guidé dans une première piste de guidage au moyen d'un organe de guidage, ce mécanisme étant en liaison d'entraînement avec un toc d'entraînement de la cage, caractérisé en ce que la première piste de guidage (23) est constituée de deux gorges de guidage (24, 25) inclinées en sens opposés et en particulier inclinées également par rapport au sens de mouvement (29) et se croisant l'une sur l'autre, ces gorges étant ménagées sur des surfaces (26, 27) se faisant face l'une à l'autre, s'étendant sensiblement parallèlement l'une à l'autre, du côté du boîtier et du côté du disque en nutation, et en ce que l'organe de guidage (21) est toujours guidé dans le point de croisement (31) dans les gorges de guidage (24, 25).

2. Coussinet orientable pour un disque en nutation, selon la revendication 1, caractérisé en ce que l'organe de guidage (21) est en liaison d'entraînement avec le toc (19) d'entraînement dans une deuxième piste de guidage (20) dirigée transversalement, en particulier perpendiculairement au sens de mouvement (29) du segment de roulement à rouleaux (14), et qui rend possible un mouvement relatif.

3. Coussinet orientable pour un disque en nutation selon la revendication 2, caractérisé en ce que la deuxième piste de guidage (20) est constituée par un trou allongé (22) dans le toc (19) d'entraînement, et dans lequel l'organe de guidage (21) s'engage dans le toc en le traversant.

4. Coussinet orientable pour un disque en nutation selon l'une des revendications 1 à 3, caractérisé en ce qu'au moins une des pistes de guidage, constituées par les rainures de guidage (24, 25) est courbée dans le plan d'orientation.

5. Coussinet orientable pour un disque en nutation selon l'une des revendications 1 à 3, caractérisé en ce que la voie de guidage constituée par la deuxième piste de guidage (22) est courbée et/ou inclinée dans le plan d'orientation.

6. Coussinet orientable pour un disque en nutation selon l'une des revendications 1 à 5, caractérisé en ce que les rainures de guidage (24, 25) ont une section transversale arrondie de forme circulaire et en ce que l'organe de guidage (21) est constitué par une bille (32) dont la taille correspond à la section arrondie des rainures.

7. Coussinet orientable pour un disque en nutation selon l'une des revendications 1 à 6, caractérisé en ce que le toc (19) d'entraînement s'étend parallèlement aux portées (11, 12) et en ce que la première piste de guidage (23) est ménagée sur des élargissements latéraux des portées (11, 12) ou sur des surfaces (26, 27) s'étendant parallèlement aux portées (11, 12) (Figure 4).

8. Coussinet orientable pour un disque en nutation selon l'une des revendications 1 à 6, caractérisé en ce que le toc (19) d'entraînement et les surfaces (26, 27) s'étendent radialement par rapport à l'axe d'oscillation (28) et en ce que la première piste de guidage (23) est ménagée sur ces surfaces (26, 27) (Figure 3).

9. Coussinet orientable pour un disque en nutation selon l'une des revendications 1 à 6, caractérisé en ce que le toc (19) d'entraînement est orienté radialement vers l'intérieur.

10. Coussinet orientable pour un disque en nutation selon l'une des revendications 1 à 6, caractérisé en ce que le toc (19) d'entraînement est réalisé d'une seule pièce sur la cage (16).

11. Coussinet orientable pour un disque en nutation selon la revendication 7, caractérisé en ce que la cage (16) est en matière plastique et en ce que le toc (19) d'entraînement est réalisé par surmoulage sur la cage (16).

FIG.1

FIG.2

FIG.3

31 24 20,22 10

26 27 11 15 16

19 3 25 12

21,32

FIG. 4

28 FIG. 5

10 24 25

16

21,32